# EUROPEAN PATENT APPLICATION

(11) **EP 4 481 642 A1**
(43) Date of publication of application: **25.12.2024**
(21) Application number: 23315254.5
(22) Date of filing: 20.06.2023
(51) Int. Cl.: G06Q 10/00, G06Q 10/063, G06Q 10/08, G06Q 50/00, G06Q 50/10

(54) **CREATION OF A DIGITAL TWIN/AVATAR ENABLING PHYSICAL PERSON IDENTIFICATION**

(71) Applicant: THALES DIS FRANCE SAS, 92190 Meudon (FR)
(72) Inventor: Costard, Anne-Marie, 13122 VENTABREN (FR); Peirani-Mercelot, Béatrice, 13119 ST SAVOURNIN (FR); Pauliac, Mireille, 13470 CARNOUX EN PROVENCE (FR)
(74) Representative: Thomas, Christine Marie Catherine

(57) **Abstract**

The present invention relates to a method to create a digital twin in a virtual environment dedicated to be visually displayed in real world, said digital twin being a visual representation in the virtual environment of an entity identifiable in real world, said method comprising the steps of determining at least one parameter enabling to uniquely identify the identifiable entity represented by said digital twin, said parameter being besides stored in a secure database associating the parameter to the identifiable entity, generating a readable tag from said parameter, said readable tag being suitable to be read, in real world, from any kind of visualization of the virtual environment in real world, to retrieve the parameter and to identify the identifiable entity, inserting the readable tag in the visual representation in the virtual environment of the entity identifiable in real world, said virtual tag being permanently displayed in the virtual environment whatever is the position of the digital twin in the virtual environment.

## Description

### FIELD OF THE INVENTION

The present invention relates to a method to create a digital twin in a virtual environment dedicated to be visually displayed in real world, said digital twin being a visual representation in the virtual environment of an entity identifiable in real world. Typically, such an identifiable entity is a physical person, a physical object controlled by a physical person, a physical object controlled by a robot...

The invention also pertains to such a digital twin, to a virtual environment displaying such digital twins and to a method to identify an entity identifiable in real world visually represented by a digital twin of the invention in a virtual environment dedicated to be visually displayed in real world.

### BACKGROUND OF THE INVENTION

Viverse of HTC presented during Mobile World Congress 2022 is an example of a next version of the web, constituted of virtual worlds known under the name "Metaverses". Digital twin or avatar are new trends appearing everywhere. Digital twin is a virtual copy of physical object or person. It is an icon or figure named "avatar" in the following, representing a particular person in a video game, internet forum. Digital twin/avatar are major new use-cases for 5G-Advanced and 6G.

It is here noted that the digital twin applies not only to physical person but also to objects. It is specifically useful in the industrial domain. Thus any element monitored in an industrial environment can be represented in its digital twin form for simulation/maintenance purposes. A machine biometric is defined as a set of measurements that characterizes the machine inherent nature. Each device has some specific behavior or characteristic on some measurable parameters inherent to its nature. The set of measurement or pattern gives the biometry of the device. For example, a biometric of a car can be the noise of the motor.

Many questions arise related to the link between the physical world and the metaverse, among which:
- How to guarantee the digital twin/avatar may be liable for his actions in the metaverse?
- How to retrieve the legitimate physical entity associated to the digital twin/avatar?
- How to distinguish avatars when they look similar while they belong to different physical persons?

In the metaverse, there could also be situations where the liability of the identifiable entity, who is controlling a digital twin/avatar or who is represented by a digital twin/avatar in the metaverse, is engaged.

This last problem is explained in the following link:
https://theconversation.com/the-metaverse-three-legal-issues-we-need-to-address-175891 :
*..."How could we make an avatar responsible for their actions in the metaverse? This would be complicated, because it would mean that we need to attribute a legal persona to the avatar, giving them rights and duties within a legal system; allowing them to sue or be sued."*
...*"Worryingly, sexual predators are already emerging in the metaverse, masking their identity behind an avatar that may not easily be traced back to its operator in the real world."*

Even not yet regulated in the metaverse, there is also a privacy concern. How ensuring the privacy of the digital twin/avatar in the metaverse and at the same time be able to trace it for liability purposes?

Further alternative and advantageous solutions would, accordingly, be desirable in the art.

### SUMMARY OF THE INVENTION

The present invention aims at enabling to keep avatars anonymous while ensuring to be able to identify the identifiable entity represented by the avatar and/ controlling it. In the rest of the text, avatar or digital twin is used indifferently.

The present invention is defined, in its broadest sense, as a method to create a digital twin in a virtual environment dedicated to be visually displayed in real world, said digital twin being a visual representation in the virtual environment of an identifiable entity in real world, said method comprising the steps of:
- determining at least one parameter enabling to uniquely identify the identifiable entity in real world represented by said digital twin, said parameter being besides stored in a secure database associating the parameter to the identifiable entity;
- generating a readable tag from said parameter, said readable tag being suitable to be read, in real world, from any kind of visualization of the virtual environment in real world, to retrieve the parameter and to identify the identifiable entity;
inserting the readable tag in the visual representation in the virtual environment of the entity identifiable in real world, said virtual tag being permanently displayed in the virtual environment whatever is the position of the digital twin in the virtual environment

This invention allows the identification of digital twin/avatar in the metaverse, using a parameter which may be a virtual biometry and/or any subset of the parameters entangled in the digital representation of the digital twin/avatar, associated to a legitimate physical object or person.

Privacy is preserved as the association between the identifiable entity and the digital twin is not disclosed by the sole knowledge of the entanglement except to authorized entity which have access to the database where associations between parameters and physical persons are stored.

Entanglement of the virtual biometry and/or other parameters in the digital representation of the digital twin/avatar in the metaverse is visual, accessible to the other digital twins/avatars or entangled in order not to be visible for human eyes but readable or scannable by an adapted device, possibly having appropriate rights. Such an adapted device can implement an image processing to detect the tag and thus to retrieve the associated parameter. Such an implementation is interesting in the case where a service provider independent from the operator of the metaverse needs for example to verify a specific attribute of a user of the metaverse, i.e. an age limit. An automatic image processing can be implemented on an automatic capture of the displayed virtual environment and the relevant information can then be retrieved without intervention of the user or of the operator of the metaverse. Such an image processing in the local device of the user can be part of an application of the service provider. It is a kind of "virtual" scan of the displayed virtual environment. It enables to access to the tag from the display and to retrieve the associated parameters.

It is here noted that the terms "visual representation" designates a display in the virtual world. According to the invention, said display has a readable tag which can be visible for the human eyes, e.g. a QR code of a size and a color/format visible for the human eyes, or not visible for the human eyes, e.g. a watermark, a QR code entangled in colored area of the displayed virtual world or of a size not visible for the human eyes.

According to a feature, the readable tag is chosen among a QR code, a barcode, a watermark.

Advantageously, the readable tag is entangled within the digital twin.

Such an entanglement enables a very user friendly visual interface while keeping the relevant information to identify the identifiable entities available to specific devices able to read the entangled information. Typically, the entanglement enables the tag not to be visible for human eyes, thus not harming the user experience.

According to another feature, the visualization of the virtual environment is chosen among a screenshot, a photo or a video of the virtual environment as displayed in real world, a direct scan of the virtual environment as displayed using an adapted device, an image processing of the displayed virtual environment.

According to a specific feature, the step of generating the readable tag is performed regularly making the readable tag varying in time.

This avoids stealing of virtual tag which could be copied and fraudulently used.

According to different embodiments of a time-changing readable tag, the generation of the readable tag is chosen among a selection within a pool of readable tags predefined for the identifiable entity or a computation on the fly. Accordingly, the tag could be overlaid with a dynamic pattern that modifies the color or the brightness, or the contrast, or the fading, the orientation or any other parameter of the image, said pattern being known only by the authority. Indeed, any display parameter modulation can be used according to the invention. In such case, a video of the displayed virtual environment is necessary to be acquired for the implementation of the invention.

Advantageously, the determined parameter is chosen among a biometric data, a unique chosen identifier, an age value.

The invention also relates to a digital twin of a virtual environment dedicated to be visually displayed in real world, said digital twin being a visual representation in the virtual environment of an entity identifiable in real world, said digital twin comprising a readable tag in the visual representation in the virtual environment of the entity identifiable in real world, said virtual tag being permanently displayed in the virtual environment whatever is the position of the digital twin in the virtual environment, said readable tag having been generated from at least one parameter enabling to uniquely identify the identifiable entity represented by said digital twin, said parameter being besides stored in a secure database associating the parameter to the identifiable entity, said readable tag being further suitable to be read, in real world, from any kind of visualization of the virtual environment in real world, to retrieve the parameter and to identify the identifiable entity.

Such a digital twin obtained with the invention enables an authorized third party to retrieve the identity of a physical person represented by or controlling an avatar in the virtual environment.

When the readable tag is entangled in the digital twin, advantageously, the visual representation in the virtual environment being a set of pixels forming various colors and shapes, the virtual tag is formed by group of pixels in the set of pixels, said group of pixels being blended into said various colors and shapes.

This embodiment enables the readable tag to be inserted in the visual representation while not disturbing the experience of human eyes looking at the virtual environment.

Advantageously, the whole set of pixels is paved with several groups of pixels forming each the virtual tag.

The invention also relates to a virtual environment dedicated to be visually displayed in real world, said virtual environment comprising visual representations in the virtual environment of an entity identifiable in real world as digital twins of said physical person or physical object controlled by a physical person, said digital twin comprising a readable tag in the visual representation in the virtual environment of the entity identifiable in real world, said virtual tag being permanently displayed in the virtual environment whatever is the position of the digital twin in the virtual environment, said readable tag having been generated from at least one parameter enabling to uniquely identify the identifiable entity represented by said digital twin, said parameter being besides stored in a secure database associating the parameter to the identifiable entity, said readable tag being further suitable to be read, in real world, from any kind of visualization of the virtual environment in real world, to retrieve the parameter and to identify the identifiable entity.

According to a feature, said virtual environment is suitable to be visualized in real world for tag reading using one of the following: a display to be scanned using an adapted device, a display to be processed by image processing to read the tag, a screenshot, a photo or video of the displayed virtual environment, an image processing.

At last, the invention relates to a method to identify a physical person visually represented by a digital twin or a physical person controlling a physical object represented by a digital twin in a virtual environment dedicated to be visually displayed in real world, said method comprising the steps of:
- getting a visualization of the virtual environment in real world;
- reading on said visualization, in real world, a readable tag inserted in the visual representation in the virtual environment of the entity identifiable in real world, said virtual tag being permanently displayed in the virtual environment whatever is the position of the digital twin in the virtual environment, said readable tag having been generated from at least one parameter enabling to uniquely identify the identifiable entity represented by said digital twin;

- retrieving the parameter from the read readable tag, said parameter being besides stored in a secure database associating the parameter to the identifiable entity;
- identifying the identifiable entity thanks to the parameter.

The invention thus enables any authorized party to retrieve the parameter thanks to a visualization of the virtual environment. The knowledge of the parameter, uniquely associated to a physical person, enables to identify any physical person behind a digital twin.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents a method to create an avatar according to the invention;
- Figure 2 illustrates the invention;
- Figure 3 schematically show a method to identify a physical person according to the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

The invention enables to retrieve a parameter representative of a physical person linked to the avatar using any kind of visualization of the virtual environment.

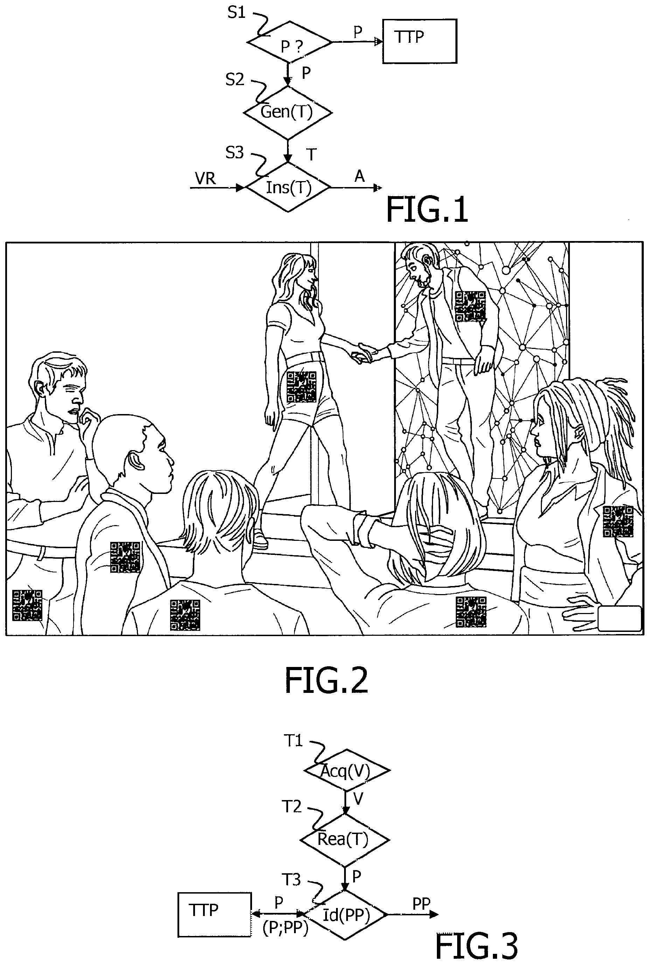

Figure 1 schematically represents a method to create an avatar according to the invention. In a first step S1, at least one parameter P is determined. This parameter is linked in a bijective way to the identifiable entity who is behind the avatar to be created. The parameter(s) thus enable(s), once known, to uniquely identify the identifiable entity who is linked to the avatar. Advantageously, the parameter P is a biometric of the avatar calculated from attributes of the avatar as chosen by the identifiable entity and from biometric data from the identifiable entity him/herself. It is here noted that the parameter P advantageously preserves privacy of the identifiable entity.

This parameter P is besides stored associated to the identity of the identifiable entity by a trusted third party.

In a second step S2, the parameter P is used in the generation of a readable tag T. Such a tag can be of many kinds, like a QR code, a bar code, a specific unique watermark to be introduced in the visual representation of the identifiable entity in the virtual environment.

The tag is generated to be able to be read, in real world, from any kind of visualization of the virtual environment. Typically, a OR-code reader will be used.

In a step S3, the readable tag T is inserted in the visual representation VR of the identifiable entity in the virtual environment. It is here noted that the visual representation VR is besides defined by the identifiable entity as known in prior art. The identifiable entity generally chooses attributes for an avatar/digital twin and agrees on his/her visual representation in the virtual environment.

The readable tag T is entangled within the visual representation VR and the final digital twin A is thus obtained.

Figure 2 shows a virtual environment of the invention. In this environment, several digital twins A of the invention for several physical persons interact. The virtual environment appears as it appears to the identifiable entities on a screen, typically, or on any system adapted to display said virtual environment. This figure is a visualization in 2D adapted to be used according to the invention to retrieve the parameter P for one or several of the digital twins who appear at this moment.

The visualization of figure 2 is typically a screenshot done by one of the identifiable entities. It could also be a photo.

On the image as shown on figure 2, QR codes are appearing on each of the digital twins. The QR codes are visible for the need of the explanation of the invention but they could be entangled in the visual representations forming an avatar A. The visual representation in the virtual environment is by default a set of pixels forming various colors and shapes.

Advantageously, the virtual tag T is formed by group of pixels in such a set of pixels, said group of pixels being blended into said various colors and shapes. More specifically, the whole set of pixels can be paved with several groups of pixels forming each the virtual tag. In this case the visual representation is formed of readable tags of the invention, these readable tags taking the colors of the visual representation as besides chosen by the identifiable entity.

Figure 3 shows a method to identify a physical person PP represented by a digital twin A of the invention or controlling a physical object represented by a digital twin of the invention in a virtual environment of the invention.

In a first step T1, a visualization V of the virtual environment is captured. For example, a physical person who assisted to an illegal action in the virtual environment while acting in this virtual environment displaying digital twins of several other physical persons took a screenshot or a photo of his/her screen where the virtual environment is displayed.

Typically, the visualization V is then provided to a trusted entity authorized to scan the screenshot or the photo and authorized to access to the database where the associations between the parameters and the identifiable entities have been stored by the trusted third party TTP. Advantageously the trusted entity is the trusted third party TTP.

The readable tag T in the visualization V is then scanned/read in a step T2 with an adapted OR-code reader in real world, typically by an operator of the trusted entity. The parameter P is thus retrieved. In a step T3, using the data stored by the trusted third party TTP and the parameter P the trusted entity identifies the identifiable entity PP.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to create a digital twin/avatar in a virtual environment dedicated to be visually displayed in real world, said digital twin being a visual representation in the virtual environment of an entity identifiable in real world, said method comprising the steps of:
- determining at least one parameter enabling to uniquely identify the identifiable entity represented by said digital twin, said parameter being besides stored in a secure database associating the parameter to the identifiable entity;
- generating a readable tag from said parameter, said readable tag being suitable to be read, in real world, from any kind of visualization of the virtual environment in real world, to retrieve the parameter and to identify the identifiable entity;
- inserting the readable tag in the visual representation in the virtual environment of the entity identifiable in real world, said virtual tag being permanently displayed in the virtual environment whatever is the position of the digital twin in the virtual environment.

2. Method according to claim 1, wherein the readable tag is chosen among a QR code, a barcode, a watermark.

3. Method according to one of claims 1 and 2, wherein the readable tag is entangled within the digital twin.

4. Method according to one of preceding claims, wherein the visualization of the virtual environment is chosen among a screenshot, a photo or a video of the virtual environment as displayed in real world, a direct scan of the virtual environment as displayed using an adapted device, an image processing of the displayed virtual environment.

5. Method according to one of preceding claims, wherein the step of generating the readable tag is performed regularly making the readable tag varying in time.

6. Method according to claim 5, wherein the generation of the readable tag is chosen among a selection within a pool of readable tags predefined for the identifiable entity or a computation on the fly.

7. Method according to one of preceding claims, wherein the parameter is chosen among a biometric data, a unique chosen identifier, an age value.

8. Digital twin of a virtual environment dedicated to be visually displayed in real world, said digital twin being a visual representation in the virtual environment of an entity identifiable in real world, said digital twin comprising a readable tag in the visual representation in the virtual environment of the entity identifiable in real world, said virtual tag being permanently displayed in the virtual environment whatever is the position of the digital twin in the virtual environment, said readable tag having been generated from at least one parameter enabling to uniquely identify the identifiable entity represented by said digital twin, said parameter being besides stored in a secure database associating the parameter to the identifiable entity, said readable tag being further suitable to be read, in real world, from any kind of visualization of the virtual environment in real world, to retrieve the parameter and to identify the identifiable entity.

9. Digital twin according to claim 8, wherein the readable tag is chosen among a QR code, a barcode, a watermark.

10. Digital twin according to one of claims 8 and 9, wherein the readable tag is entangled within the digital twin.

11. Digital twin according to one of claims 8 to 10, wherein the visual representation in the virtual environment being a set of pixels forming various colors and shapes, the virtual tag is formed by group of pixels in the set of pixels, said group of pixels being blended into said various colors and shapes.

12. Digital twin according to claim 11, wherein the whole set of pixels is paved with several groups of pixels forming each the virtual tag.

13. Virtual environment dedicated to be visually displayed in real world, said virtual environment comprising visual representations in the virtual environment of an entity identifiable in real world as digital twins of said physical person or physical object controlled by a physical person, said digital twin comprising a readable tag in the visual representation in the virtual environment of the entity identifiable in real world, said virtual tag being permanently displayed in the virtual environment whatever is the position of the digital twin in the virtual environment, said readable tag having been generated from at least one parameter enabling to uniquely identify the identifiable entity represented by said digital twin, said parameter being besides stored in a secure database associating the parameter to the identifiable entity, said readable tag being further suitable to be read, in real world, from any kind of visualization of the virtual environment in real world, to retrieve the parameter and to identify the identifiable entity.

14. Virtual environment as claimed in claim 13, said virtual environment being suitable to be visualized in real world for readable tag reading using one of the following: a display to be scanned using an adapted device, a display to be processed by image processing to read the tag, a screenshot, a photo or video of the displayed virtual environment.

15. Method to identify a physical person visually represented by a digital twin or a physical person controlling a physical object represented by a digital twin in a virtual environment dedicated to be visually displayed in real world, said method comprising the steps of:
- getting a visualization of the virtual environment in real world;
- reading on said visualization, in real world, a readable tag inserted in the visual representation in the virtual environment of the entity identifiable in real world, said virtual tag being permanently displayed in the virtual environment whatever is the position of the digital twin in the virtual environment, said readable tag having been generated from at least one parameter enabling to uniquely identify the identifiable entity represented by said digital twin;
- retrieving the parameter from the read readable tag, said parameter being besides stored in a secure database associating the parameter to the identifiable entity;
- identifying the identifiable entity thanks to the parameter.
